# EUROPÄISCHE PATENTANMELDUNG

(11) **EP 2 899 518 A1**
(43) Veröffentlichungstag der Anmeldung: **29.07.2015**
(21) Anmeldenummer: 14152613.7
(22) Anmeldetag: 27.01.2014
(51) Int. Cl.: G01K 1/08, G01K 7/22

(54) **Temperaturmesseinrichtung**

(71) Anmelder: Technische Universität Chemnitz, 09111 Chemnitz (DE)
(72) Erfinder: Dr. Lehmann, Daniel, 09126 Chemnitz (DE); Prof. Zahn, Dietrich R. T., 08396 Schlagwitz (DE); Pittner, Steve, 09126 Chemnitz (DE); Dr. Fronk, Michael, 09244 Lichtenau (DE); Arnold, Markus, 09126 Chemnitz (DE)
(74) Vertreter: Steiniger, Carmen

(57) **Zusammenfassung**

Die vorliegende Erfindung betrifft eine Temperaturmesseinrichtung mit wenigstens einem Sensorelement, das mit Kontaktelementen gekoppelt ist, die mit einer elektrischen Spannungsversorgung zum Anlegen einer Spannung an das Sensorelement und einer Strommesseinrichtung zum Messen eines Stromflusses durch das Sensorelement verbunden sind. Es ist die Aufgabe der vorliegenden Erfindung, eine Temperaturmesseinrichtung zur Verfügung zu stellen, die bei Temperaturen bis 1800 °C dauerhaft genaue und zuverlässige Temperaturmesswerte zur Verfügung stellt. Die Aufgabe wird erfindungsgemäß durch eine Temperaturmesseinrichtung der genannten Gattung gelöst, bei welcher das Sensorelement aus wenigstens einem Sensormaterial ausgebildet ist, das bei 300 K eine Bandlücke von ≥ 2 eV aufweist, das Sensormaterial und die Anschlusselemente bei 10⁵ Pa eine Schmelztemperatur von ≥ 1800 °C aufweisen, und um das Sensorelement eine gasdicht verschlossene Verkapselung mit einem Innenhohlraum vorgesehen ist, aus welcher Anschlüsse der Anschlusselemente herausgeführt sind.

## Beschreibung

Die vorliegende Erfindung betrifft eine Temperaturmesseinrichtung mit wenigstens einem Sensorelement, das mit Kontaktelementen gekoppelt ist, die mit einer elektrischen Spannungsversorgung zum Anlegen einer Spannung an das Sensorelement und einer Strommesseinrichtung zum Messen eines Stromflusses durch das Sensorelement verbunden sind.

Genaue Langzeittemperaturmessungen für Temperaturen bis ca. 1000 °C können beispielsweise mit Hilfe von Thermowiderständen, welche auf Basis der Widerstandsabhängigkeit von der Temperatur arbeiten, realisiert werden. Die heute im Einsatz befindlichen Temperaturerfassungssysteme erfassen die Temperatur a) auf mechanischem Wege durch Ausnutzen unterschiedlicher Ausdehnungskoeffizienten von Materialien, b) auf elektrischem Wege durch Nutzung des temperaturabhängigen elektrischen Widerstands von elektrischen Leitern, der Thermoelektrizität, der Temperaturabhängigkeit der Bandlücke von Halbleitern oder des pyroelektrischen Effektes oder c) berührungslos durch Messung der Wärmestrahlung mittels Pyrometer.

Die meisten dieser Verfahren sind jedoch nur zur Bestimmung von Temperaturen im Bereich von < 1000 °C geeignet. Im hohen Temperaturbereich, das heißt, bei Temperaturen > 1200 °C, findet eine Temperaturmessung nahezu ausschließlich mit Thermoelementen und optischen Pyrometern statt, bei denen es jedoch vor allem große Einschränkungen bei der Genauigkeit und der kontinuierlichen Messung gibt.

So werden Thermoelemente z. B. im Ofenbau nicht direkt am zu messenden Temperaturpunkt eingesetzt, sondern thermisch geschützt an einem kälteren Punkt hinter Isoliermaterial. Der Temperaturwert wird dabei aus dem eigentlichen Messwert und einem zu addierenden Fixwert errechnet, welcher mehrere hundert Grad Celsius beträgt. Dies ist notwendig, da das Thermoelement bei sehr hohen Temperaturen keinen dauerhaft zuverlässigen Wert liefern kann, da Diffusionseffekte an der Metall/Metall-Grenzfläche sowie Alterung der Thermoelementdrähte zu einer kontinuierlichen und rapiden Degradation des Thermoelements führen - der Messfehler nimmt fortwährend zu.

Pyrometer wiederum messen die Temperatur von Oberflächen; eine Bestimmung der Temperatur unterhalb dieser Oberfläche ist nicht möglich. Besonders im industriellen Umfeld sind Oberflächen im Temperaturbereich bis 1800 °C nur schwer der direkten Messung zugänglich. So können Gase in der Metallurgie zur Schaumbildung führen. Oder Schlackenschichten auf der Oberfläche des flüssigen Metalls verhindern den optischen Zugang für das Pyrometer. Des Weiteren befinden sich oft heiße Gase und Sichtfenster im Strahlengang, sodass der Messwert verfälscht wird. Für viele Legierungen ist in diesem Temperaturbereich zudem der Emissionswert bislang nicht ermittelt, welcher maßgeblich für die Umrechnung des gemessenen Strahlungsspektrums in einen Temperaturwert ist.

Aus dem Stand der Technik sind unterschiedliche, bei hohen Temperaturen einsetzbare Temperaturmesseinrichtungen bekannt. So ist in der Druckschrift CN 26 39 863 Y wird eine Übertragungseinrichtung von Temperaturmessdaten offenbart, welche hauptsächlich der Messung und Übertragung der Temperatur des Hochofenkühlwassers dient. Dabei kommt ein Halbleiter-Temperatursensor zum Einsatz, welcher mit einem Temperatursender ausgestattet ist, der mit dem Temperatursensor in einer Hülle vorgesehen ist.

Aus der Druckschrift CN 201 497 591 U ist ein Thermoelement zur Messung der Temperaturverteilung eines Metall-Stichlochkanals eines Hochofens bekannt. Das Thermoelement ist ein Draht, welcher in einem isolierenden, magnetischen Kern und einem Dichtkopf-Metall-Schutzgehäuse angeordnet ist. Dabei weist die Schutzhülle eine hohe Temperaturbeständigkeit auf. Der Temperatur aufnehmende Draht des Thermoelementes ragt 5 bis 10 cm aus dem Schutzgehäuse heraus. Die Öffnung des Schutzgehäuses ist fest mit der äußeren Wand des metallischen Dichtkopf-Schutzgehäuses verbunden.

In der Druckschrift CN 202 119 561 U wird ein tragbares, drahtloses Temperaturmessgerät für die Messung der Temperatur von flüssigem Eisen vorgeschlagen. Das Anwendungsgebiet erstreckt sich auf zu messende Umgebungstemperaturen, wie sie bei Hochtemperaturschmelzöfen, Tunnelöfen und Hochtemperatur-Brennkammern erreicht werden. Das Temperaturmessgerät weist ein Keramikrohr auf, an dessen einem Ende eine wärmeaufnehmende Schmelzpunktkappe befestigt ist. Zudem ist das Keramikrohr in einem Metallgehäuse angeordnet. Das Vorhandensein eines Farbfilters, einer Sammellinse sowie einer Auswerteeinheit in Form eines Mikrocomputerchips deutet auf eine photoelektrische Temperaturmessung hin.

Die Druckschrift CN 101 551 403 A enthält einen Silizium-Chip, welcher gleichzeitig zum Testen von Beschleunigung, Druck und Temperatur geeignet ist. Dabei kommt ein Thermistor aus Polysilizium zum Einsatz, welcher der Erkennung von Temperaturänderungen dient. Als Heizelement dient ein Polysiliziumwiderstand.

In der Druckschrift JP 2010 237 156 A ist ein Herstellungsverfahren für ein Thermoelement beschrieben, das durch Fusion Bonding erhalten wird. Das Thermoelement wird mit laminierten Glasschichten versiegelt, wodurch es Festigkeit und gleichzeitig eine elektrische Isolierung erlangt. Eine zusätzliche Abdichtung realisiert eine Glasdichtung.

Die Druckschrift JP H 200 131 80 06 A offenbart einen Temperaturfühler, welcher in Diffusionsöfen bei der Waferherstellung verwendet wird. Dabei kommen Diffusionstemperaturen zum Einsatz, die sich in einem Temperaturbereich bis 1200 °C bewegen und exakt eingestellt werden müssen, um akzeptable Diffusionsergebnisse zu erzielen. Als Temperaturfühler fungiert ein Draht, welcher aus einer zylindrischen Hülse beidseitig herausragt. Ein Ende des Drahtes ragt dabei in den Diffusionsofen. Eine Hülse umschließt luftdicht den Draht. Eine weitere Hülse, welche wiederum die erste Hülse teilweise umschließt, ist an einer Wandfläche des Ofens befestigt. Die erste Hülse, welche am Draht anliegt, ist luftdicht mit der zweiten Außenhülse verbunden.

Auch die Druckschrift WO 2009/082539 A1 betrifft ein Thermoelement, welches bei der Waferherstellung zum Einsatz kommen soll. Das Thermoelement offenbart im Vergleich zu der Druckschrift JP H 200 131 80 06 A die Verwendung eines redundanten zweiten Drahtpaares. Die zweite Messposition dient der Sicherheit und erhöht die Wahrscheinlichkeit einer ununterbrochenen Temperaturmessung.

Die Druckschrift JP 200 50 56 986 A beinhaltet ebenfalls eine Vorrichtung für die Temperaturüberwachung während der Waferherstellung. Dabei dient der gemessene Schichtwiderstand als Maß für die Oberflächentemperatur der Epitaxieschicht. Die Temperaturmessung erfolgt an mehreren Positionen eines Waferwagens.

Die Druckschrift CN 102095517 A beschäftigt sich mit dem Messen von Temperaturen bis 1700 °C. Darin wird beschrieben, wie Umgebungseinflüsse auf die Messung reduziert werden können, wenn eine Keramikschicht auf ein Thermoelement aufgebracht wird.

Es ist die Aufgabe der vorliegenden Erfindung, eine Temperaturmesseinrichtung zur Verfügung zu stellen, die bei Temperaturen bis 1800 °C dauerhaft genaue und zuverlässige Temperaturmesswerte zur Verfügung stellt.

Die Aufgabe wird erfindungsgemäß durch eine Temperaturmesseinrichtung der oben genannten Gattung gelöst, bei welcher das Sensorelement aus wenigstens einem Sensormaterial ausgebildet ist, das bei 300 K eine Bandlücke von ≥ 2 eV, bevorzugt von ≥ 3,2 eV, besonders bevorzugt ≥ 4 eV, aufweist, das Sensormaterial und die Anschlusselemente bei 10⁵ Pa eine Schmelztemperatur von ≥ 1800 °C aufweisen, und um das Sensorelement eine gasdicht verschlossene Verkapselung mit einem Innenhohlraum vorgesehen ist, aus welcher Anschlüsse der Anschlusselemente herausgeführt sind.

Die erfindungsgemäße Temperaturmesseinrichtung ist ein Thermometer für sehr heiße Medien, insbesondere für Temperaturen im Bereich von 1200 bis 1800 °C. Diese Medien können beispielsweise flüssige Metalle oder sehr heiße Gase, wie sie z. B. in der Zementherstellung vorkommen, sein.

Eine Besonderheit der erfindungsgemäßen Temperaturmesseinrichtung besteht darin, dass zum Erfassen der Temperatur ein Sensorelement verwendet wird, welches im undotierten Zustand bei Raumtemperatur Isolatoreigenschaften besitzt und erst bei hohen Temperaturen Halbleitereigenschaften aufweist. Es kommt hierfür zur Ausbildung des Sensorelementes wenigstens ein Sensormaterial zum Einsatz, das bei Raumtemperatur eine große Bandlücke von ≥ 2 eV, bevorzugt von ≥ 3,2 eV, besonders bevorzugt ≥ 4 eV, aufweist. Dabei wird erfindungsgemäß der Effekt der Temperaturabhängigkeit der thermischen Anregung von Valenzelektronen von hochschmelzenden Isolatoren genutzt. Dieser Effekt führt dazu, dass der wenigstens eine, zur Ausbildung des Sensorelementes verwendete Raumtemperatur-Isolator im angestrebten Temperaturbereich zum Halbleiter wird, da in diesem Temperaturbereich ausreichend Elektronen im Leitungsband zur Verfügung stehen.

Da erfindungsgemäß sowohl das verwendete Sensormaterial als auch die verwendeten Anschlusselemente bei Normaldruck eine Schmelztemperatur von ≥ 1800 °C aufweisen, können sie direkt in oder an dem zu messenden Medium platziert werden, um die Temperatur des Mediums direkt und damit genau erfassen zu können. Durch die gasdicht verschlossene Verkapselung wird das Sensorelement der erfindungsgemäßen Temperaturmesseinrichtung geschützt, sodass beispielsweise ungewünschte chemische Reaktionen des Sensormaterials mit die Temperaturmesseinrichtung umgebenden Medien ausgeschlossen werden können.

Mittels der Kontaktierung des Sensormaterials über die Anschlusselemente kann erfindungsgemäß dauerhaft und mit hoher Zuverlässigkeit eine temperaturabhängige elektrische Kennlinie des Sensorelementes aufgenommen und in einen Temperaturwert übertragen werden.

Bei der vorliegenden Erfindung ist es möglich, dass allein die Widerstandsänderung des Sensormaterials des Sensorelementes zur Temperaturauswertung benutzt wird. In vorteilhaften Ausführungsformen der erfindungsgemäßen Temperaturmesseinrichtung ist das Sensorelement jedoch mit bei Raumtemperatur elektrisch leitfähigen, vorzugsweise metallischen, Kontaktelementen gekoppelt. Diese Kontaktelemente können beispielsweise beidseitig des Sensorelementes vorgesehen sein. Die Kontaktelemente weisen bei 10⁵ Pa eine Schmelztemperatur von ≥ 1800 °C auf.

In diesen Ausführungsformen ist somit das hochschmelzende Material des Sensorelementes, welches eine derart große Bandlücke besitzt, dass es bei Raumtemperatur als Isolator anzusehen ist, im Kontakt mit dem hochschmelzenden Material der Kontaktelemente. Die daraus entstehende Verbindung entspricht an jedem der Kontakte des Sensormaterials mit den Kontaktelementen jeweils einer Schottky-Diode oder einem ohmschen Kontakt, je nach eingesetzter Materialkombination bzw. je nach Austrittsarbeit des verwendeten Metalls und Differenz von Leitband- und Valenzbandenergie des Sensormaterials.

Schottky-Dioden werden im Bereich von einigen 100 °C bereits in großem Maßstab zur Temperaturmessung eingesetzt, wobei konventionelle Halbleiter, also Materialien, die bei Raumtemperatur halbleitende Eigenschaften aufweisen, zum Einsatz kommen. In der vorliegenden Erfindung wird dagegen die Materialkombination aus dem Sensormaterial und dem Material der Kontaktelemente erst bei hohen Temperaturen, bei welchen das bei Raumtemperatur Isolatoreigenschaften aufweisende Sensormaterial zum Halbleitermaterial wird, zur Schottky-Diode. Erfindungsgemäß kommt wenigstens ein Sensormaterial zum Einsatz, das vorzugsweise in einem Temperaturbereich zwischen 1200 °C und 1800 °C, wobei auch ein Teilbereich diese Temperaturbereiches, wie beispielsweise der Temperaturbereich zwischen 1400 °C und 1800 °C, erfindungsgemäß ausreichend ist und der Temperaturbereich auch über 1800 °C hinausgehen kann, halbleitende Eigenschaften aufweist.

Die Kontaktelemente können auf das Sensormaterial abgeschiedene Schichten und/oder auf das Sensormaterial gebondete Platten und/oder Stempel oder Platten, zwischen welchen das Sensorelement geklemmt gehalten wird, und/oder metallische Substrate sein, auf welchen das Sensormaterial aufgewachsen ist, wobei das Sensormaterial nachfolgend zusammengebracht und gebondet wurde.

Beispielsweise kann das Material der Kontaktelemente mittels physikalischer Abscheidung, wie beispielsweise durch Magnetron-Sputtern, und/oder mittels chemischer Gasphasenabscheidung auf das Sensormaterial abgeschieden werden. Dadurch kann ein sehr sauberer Schottky-Übergang zwischen Sensormaterial und dem Material der Kontaktelemente erzeugt werden.

Wenn dickere Kontaktelemente gewünscht sind, empfiehlt es sich, das Material der Kontaktelemente in Form von Platten auf das Sensormaterial zu bonden. Auch hierdurch können vorteilhafte Schottky-Übergänge zwischen dem Sensormaterial und dem Material der Kontaktelemente erzielt werden.

Grundsätzlich ist es jedoch auch möglich, das Sensormaterial so fest zwischen stempeloder plattenförmigen Kontaktelementen einzuklemmen und hierdurch die notwendigen Schottky-Übergänge zu erzeugen.

Entsprechend einer weiteren genannten Variante zur Erzeugung der Schottky-Übergänge ist es vorgesehen, das Sensormaterial zunächst auf metallischen Substraten, die später die Kontaktelemente ausbilden, aufzuwachsen. Dabei hat es sich gezeigt, dass ein Aufwachsen des Sensormaterials auf solchen metallischen Substraten einfach und mit hoher Qualität realisierbar ist. Daraufhin werden die Sensormaterialseiten dieser Substrate mittels Bonden zusammengefügt, sodass ein zwischen den Kontaktelementen befindlicher Block aus Sensormaterial erzeugt wird. Im Ganzen entsteht eine Kontaktelement-Sensormaterial-Kontaktelement-Struktur mit definierten Materialübergängen, sodass bei hohen Temperaturen vorteilhafte Schottky-Charakteristiken an dieser Struktur gemessen werden können.

Es hat sich als besonders günstig erwiesen, wenn das Sensormaterial aus wenigstens einem Material aus einer ersten Gruppe von Materialien ausgewählt ist, die Aluminium(III)-oxid (Al₂O₃), Bor(III)-oxid (B₂O₃), Bariumoxid (BaO), Berylliumoxid (BeO), Wismut(III)-oxid (Bi₂O₃), Kalziumoxid (CaO), Kalziumtitanat (CaTiO₃), Cer(III)-oxid (Ce₂O₃), Cer(IV)-oxid (CeO₂), Chrom(III)-oxid (Cr₂O₃), Dysprosium(III)-oxid (Dy₂O₃), Erbium(III)-oxid (Er₂O₃), Europium(III)-oxid (Eu₂O₃), Gallium(III)-oxid (Ga₂O₃), Gadolinium(III)-oxid (Gd₂O₃), Hafnium(IV)-silikat (HfSiO₄), Hafnium(IV)-oxid (HfO), Holmium(III)-oxid (Ho₂O₃), Indium(III)-oxid (In₂O₃), Spinell (MgAl₂O₄), Magnesiumoxid (MgO), Magnesiumzinkoxid (MgZnO), Niob(II)-oxid (NbO), Niob(IV)-oxid (NbO₂), Neodym(III)-oxid (Nd₂O₃), Nickelaluminat (NiAl₂O₄), Nickel(II)-oxid (NiO), Lanthan(III)-oxid (La₂O₃), Lutetium(III)-oxid (Lu₂O₃), Lutetiumsilikat (Lu₂SiO₅), Promethium(III)-oxid (Pm₂O₃), Praseodym(III)-oxid (Pr₂O₃), Scandium(III)-oxid (Sc₂O₃), Samarium(III)-oxid (Sm₂O₃), Strontiumoxid (SrO), Strontiumtitanat (SrTiO₃), Tantal(V)-oxid (Ta₂O₅), Terbium(III)-oxid (Tb₂O₃), Thulium(III)-oxid (Tm₂O₃), Titan(III)-oxid (Ti₂O₃), Titan(IV)-oxid (TiO₂), Vanadium(IV)-oxid (VO₂), Yttrium(III)-oxid (Y₂O₃), Ytterbium(III)-oxid (Yb₂O₃), Zink(II)-oxid (ZnO), Zinkgermanat (Zn₂GeO₄), Zirkonium(II)-oxid (ZrO₂), Zirkoniumsilikat (ZrSiO₄), Aluminiumnitrid (AIN), Bornitrid (BN), Berylliumnitrid (Be₃N₂), Galliumnitrid (GaN), Siliziumnitrid (Si₃N,₄), Bariumsulfid (BaS), Kalziumsulfid (CaS), Europium(II)-sulfid (EuS), Magnesium(II)-sulfid (MgS), Strontiumsulfid (SrS), Tantal(IV)-sulfid (TaS₂), Titan(II)-sulfid (TiS), Yttrium(III)-sulfid (Y₂S₃), Yttrium(III)-antimonit (YSb), Aluminiumkarbid (Al₄C₃), Borkarbid (B₄C), Berylliumkarbid (Be₂C), Kalziumkarbid (CaC₂), Chrom(II)-karbid (Cr₃C₂), Eisenkarbid (Fe₃C), Lanthankarbid (LaC₂), Siliziumkarbid (SiC), Tantalhafniumkarbid (Ta₄HfC₅), Aluminiumphosphid (AIP), Aluminiummagnesiumborid (AIMgB₁₄), Calciumhexaborid (CaB₆), Cerhexaborid (CeB₆), Chrom(II)-borid (CrB), Hafniumborid (HfB₂), Lanthanhexaborid (LaB₆), Rheniumdiborid (ReB₂), Rutheniumdiborid (RuB₂), Siliziumhexaborid (SiB₆), Samariumhexaborid (SmB₆), Strontiumhexaborid (SrB₆), Tantaldiborid (TaB₂), Titandiborid (TiB₂), Wolframdiborid (WB₂), Yttriumhexaborid (YB₆), Zirkoniumdiborid (ZrB₂) und/oder Bor (B) aufweist; und/oder dass das Sensormaterial aus einer Materialkombination aus Materialien besteht, die aus dieser ersten Gruppe von Materialien ausgewählt sind; und/oder dass die Kontaktelemente und/oder die Anschlusselemente aus wenigstens einem Material ausgebildet sind, das ausgewählt ist aus einer zweiten Gruppe von Materialien, die Chrom, Hafnium, Iridium, Molybdän, Niob, Rhenium, Ruthenium, Tantal, Vanadium, Wolfram und/oder Zirkonium aufweist; und/oder dass die Kontaktelemente und/oder die Anschlusselemente aus einer Materialkombination aus Materialien besteht, die aus dieser zweiten Gruppe von Materialien ausgewählt sind.

Die genannten Materialien bzw. die sich daraus ergebenden Materialkombinationen sind vorteilhafte Materialbeispiele, wobei die aufgeführte Materialliste nicht als abschließend zu betrachten ist. Die genannten Materialien sind vorzugsweise hochreine einkristalline Materialien. In die engere Auswahl von Materialien oder Materialkombinationen für das Sensormaterial kommen Materialien wie Siliziumkarbid, Aluminiumnitrid, Magnesiumoxid, Spinell, Aluminiumoxid, Yttriumoxid, Zirkoniumoxid, Zirkoniumsilikat, Bornitrid, Galliumnitrid und/oder Bor. Ferner können als Material und/oder Materialkombination für die Ausbildung der Anschlusselemente neben den oben aufgeführten metallischen Materialien auch leitfähige Nitride und/oder Karbide, wie beispielsweise Tantalnitrid oder Tantalkarbid, verwendet werden. Das Material oder die Materialkombination, aus welchem bzw. aus welcher die Anschlusselemente ausgebildet sind, soll bei Raumtemperatur über eine metallische Leitfähigkeit und einen Schmelzpunkt von über 1000 °C verfügen.

Besonders vorteilhaft ist es, wenn die Verkapselung aus Keramik und/oder aus wenigstens einem Metall, das bei 10⁵ Pa eine Schmelztemperatur von ≥ 1800 °C hat und/oder eine bis wenigstens 1800 °C beständige Außenbeschichtung aufweist, und/oder wenigstens einer Metalllegierung, die bei 10⁵ Pa eine Schmelztemperatur von ≥ 1800 °C hat und/oder eine bis wenigstens 1800 °C beständige Außenbeschichtung aufweist, ausgebildet ist.

Durch die hohe Schmelztemperatur der Verkapselung, die aus Keramik oder einem anderen schmelzenden Material besteht, wird der gesamten erfindungsgemäßen Temperaturmesseinrichtung eine hohe Temperaturstabilität verliehen. Dabei kann die Verkapselung aus einem Grundmaterial mit einer hochtemperaturbeständigen Außenbeschichtung ausgebildet sein, sodass durch das Grundmaterial eine hohe mechanische Stabilität und durch die Außenbeschichtung eine hohe thermische Stabilität zur Verfügung gestellt werden kann. Durch eine solche Ausbildung der Verkapselung ist beispielsweise ein Einsatz der erfindungsgemäßen Temperaturmesseinrichtung selbst in so aggressiven Medien wie Titanschmelzen möglich.

Als Basismaterial für die Verkapselung kann beispielsweise keramisches Aluminiumoxid, keramisches Yttriumoxid, Molybdän, Tantal oder Wolfram eingesetzt werden. Unbeschichtet können beispielsweise Verkapselungen aus Aluminiumoxid in Luft oder oxidierenden Atmosphären eingesetzt werden. Verkapselungen aus Tantal eignen sich insbesondere für reduzierende Atmosphären und nicht aggressive Metallschmelzen.

Die Verkapselung kann beispielsweise ein Tubus sein. Es ist aber auch möglich, dass die Verkapselung zumindest ein Teil einer Ofen-, Tiegel- oder Reaktorwand ist. Somit kann die erfindungsgemäße Temperaturmesseinrichtung direkt in einem Medium, dessen Temperatur zu bestimmen ist, als auch alternativ direkt an einem solchen Medium platziert werden. Die Verkapselung schützt das Sensorelement beispielsweise vor aggressiven Schmelzen als auch vor reduzierenden oder oxidierenden Atmosphären.

Die Verkapselung kann unabhängig von den weiteren Bestandteilen der Temperaturmesseinrichtung vorgefertigt sein, sodass die Verkapselung und weitere Elemente der Temperaturmesseinrichtung je nach Anwendungsort und -zweck individuell zusammengesetzt und unterschiedliche Gesamtlängen mit nur geringem Modifikationsaufwand zur Verfügung gestellt werden können.

Wird als Verkapselung ein Außentubus eingesetzt, kann dieser beispielsweise für die Anwendung in Feingießereien mit einem kleinen Durchmesser von ≤ 8 mm zur Verfügung gestellt werden.

Die Verkapselung kann beispielsweise in Form eines Tubus mit einer Länge von bis zu 1,5 m oder auch länger bereit gestellt werden.

Da das Sensorelement selbst relativ klein gestaltet werden kann, kann es direkt in einen Schmelztiegel integriert werden, um einen noch besseren Wärmekontakt herzustellen bzw. um an Stellen Messungen zu ermöglichen, die mit einem geradlinigen Tubus nicht erreichbar sind.

Gemäß einer Variante der Erfindung sind ein innerhalb der Verkapselung mit wenigstens einem ersten Kontaktelement elektrisch verbundenes erstes Anschlusselement und ein innerhalb der Verkapselung mit wenigstens einem zweiten Kontaktelement elektrisch verbundenes zweites Anschlusselement vorgesehen, wobei die Anschlusselemente aus der Verkapselung herausragen und wenigstens durch ein keramisches Trennstück und/oder einen keramischen Verkapselungsdeckel voneinander elektrisch isoliert sind. Die Verkapselung kann dabei so gestaltet sein, dass die Anschlusselemente an einem kalten Ende der Verkapselung, in einer geeigneten Entfernung von dem Sensorelement, also der eigentlichen Messstelle, aus der Verkapselung herausragen. An diesem kalten Ende liegen typischerweise deutlich geringere Temperaturen als an der eigentlichen Messstelle, wo sich das Sensorelement befindet, vor, sodass die elektrische Kontaktierung der Anschlusselemente auf herkömmliche Weise erfolgen kann, ohne dass zu befürchten ist, dass die elektrischen Anschlüsse der Anschlusselemente durch zu hohe Temperatureinwirkung beeinträchtigt werden. Mithilfe des keramischen Trennstückes bzw. des keramischen Verkapselungsdeckels wird in diesem Anschlussbereich der Anschlusselemente eine vorteilhafte elektrische Isolation zwischen den Anschlusselementen zur Verfügung gestellt. Wird das keramische Trennstück gleichzeitig als keramischer Verkapselungsdeckel eingesetzt, kann hiermit nicht nur eine geeignete elektrische Isolation der Anschlusselemente voneinander, sondern gleichzeitig ein gasdichter Abschluss der Verkapselung erreicht werden.

Ein solcher gasdichter Abschluss kann bei der vorliegenden Erfindung dadurch erzielt werden, dass die Verkapselung mit dem ersten Anschlusselement gasdicht verlötet ist, das erste Anschlusselement mit dem Trennstück und/oder dem Verkapselungsdeckel gasdicht verlötet ist, und das Trennstück und/oder der Verkapselungsdeckel mit dem zweiten Anschlusselement gasdicht verlötet ist, wobei das zum Löten verwendete Lot eine Schmelztemperatur von wenigstens 900 °C aufweist. Die sich daraus ergebenden Lötstellen können vorteilhaft als elektrische Außenkontakte der Temperaturmesseinrichtung genutzt werden.

Um die Langzeitstabilität des Sensorelementes zu maximieren, ist dieses innerhalb der Verkapselung unter Schutzgasatmosphäre oder vakuumversiegelt. Die Herausführung der Anschlüsse der mit dem Sensorelement elektrisch verbundenen Anschlusselemente kann beispielsweise über metallische Kontaktringe gewährleistet werden, welche mit dem Material der Verkapselung, wie beispielsweise der Keramik eines Aluminiumoxid-Tubus oder keramischen Isolationssegmenten eines Wolfram-Tubus, verlötet sein. Dabei kann ein spezielles Lot jeweils zwischen eine für die elektrische Kontaktierung beispielsweise vorgesehene Kupferscheibe und die entsprechenden angrenzenden Keramikflächen gelegt werden. Daraufhin wird diese Anordnung im Vakuumofen oder unter Schutzgasatmosphäre auf den Schmelzpunkt des Lotes, wie beispielsweise 900 °C, erhitzt. Die abgekühlte Lotstelle ist daraufhin vakuumdicht. Da sich die erfindungsgemäße Temperaturmesseinrichtung nur an der Stelle, wo sich das Sensorelement befindet, also an einer Spitze oder einem Ende der Temperaturmesseinrichtung, auf die zu messende hohe Temperatur erhitzt, tritt im Betrieb der erfindungsgemäßen Temperaturmesseinrichtung keine Beeinträchtigung der von der Messstelle entfernten Lotstelle auf.

Besonders günstige elektrische Anschlussmöglichkeiten für die Anschlusselemente ergeben sich hierbei, wenn das zweite Anschlusselement durch eine Öffnung in dem Trennstück und/oder dem Verkapselungsdeckel hindurch, ohne elektrischen Kontakt zu dem ersten Anschlusselement geführt ist. Die Öffnung ist dabei vorteilhafterweise so vorgesehen, dass ein geeigneter Abstand zwischen den Anschlusselementen gewährleistet wird. Beispielsweise kann die Öffnung mittig durch das Trennstück bzw. den Verkapselungsdeckel hindurchführen, sodass z. B. ein stabförmig ausgebildetes zweites Anschlusselement durch diese Öffnung hindurchgeführt werden kann. Das erste Anschlusselement kann rohr- oder halbrohrförmig um das Trennstück bzw. den Verkapselungsdeckel angeordnet werden.

Eine besonders stabile Anordnung ergibt sich bei der erfindungsgemäßen Temperaturmesseinrichtung, wenn das Sensorelement durch die Anschlusselemente und/oder die Kontaktelemente mechanisch in einer Sensorposition fixiert ist. Das Sensorelement sollte möglichst nahe an oder in dem zu messenden Medium platziert werden und befindet sich daher vorzugsweise an einem äußeren Ende oder einer Spitze der erfindungsgemäßen Temperaturmesseinrichtung. Um das Sensorelement in dieser Position zu halten, ist es sinnvoll, die Anschlusselemente zu nutzen, die vorzugsweise gegen das Sensorelement und/oder die mit dem Sensorelement verbundenen Kontaktelemente drücken, um das Sensorelement in der Sensorposition zu fixieren.

In einem bevorzugten Ausführungsbeispiel der erfindungsgemäßen Temperaturmesseinrichtung weist wenigstens eines der Kontaktelemente eine wannenartige Aussparung zur Aufnahme des Sensorelementes auf. Durch die wannenartige Aussparung in dem Kontaktelement nimmt das Sensorelement eine vorteilhafte zentrierte Position auf bzw. an dem Kontaktelement ein und kann dort fixiert werden.

In einem weiteren Ausführungsbeispiel der vorliegenden Erfindung weist das Sensorelement und/oder wenigstens eines der Kontaktelemente wenigstens eine Vertiefung zum Einbringen des wenigstens einen Anschlusselementes auf. Mithilfe der Vertiefung wird die Stellung des Anschlusselementes auf dem Sensorelement oder dem Kontaktelement vordefiniert, wodurch sich ein guter, nicht verrutschbarer elektrischer Kontakt zwischen dem Anschlusselement und dem Sensorelement bzw. dem Kontaktelement ergibt.

In anderen Ausführungsformen der vorliegenden Erfindung kann das jeweilige Anschlusselement selbst, auch ohne dazwischen befindliches Kontaktelement, auf das Sensorelement drücken oder das wenigstens eine Kontaktelement kann in Form einer dünnen Beschichtung auf dem Sensorelement vorgesehen sein, sodass beispielsweise in solchen oder auch anderen Fällen keine Vertiefung, wie oben beispielhaft aufgeführt, in oder an dem Sensorelement und/oder in oder an dem Kontaktelement erforderlich ist.

Die Anschlusselemente können bei der vorliegenden Erfindung günstigerweise stabförmig, rohrförmig und/oder halbrohrförmig ausgebildet sein. In anderen Ausführungsformen der vorliegenden Erfindung sind auch noch andere geeignete Ausbildungen oder Querschnitte der Anschlusselemente möglich.

In einer günstigen Ausführungsform der vorliegenden Erfindung ist wenigstens eines der Anschlusselemente wenigstens teilweise durch wenigstens eine unter Vorspannung stehende metallische Feder ausgebildet, wobei um die Feder eine an dem Anschlusselement verschiebbare Führungshülse vorgesehen ist. Durch die Feder wird ein dauerhaft stabiles Andrücken des Anschlusselementes auf dem Kontaktelement oder dem Sensorelement gewährleistet. Hierdurch wird ein dauerhafter elektrischer Kontakt zwischen dem Anschlusselement und dem Kontaktelement bzw. dem Sensorelement hergestellt. Andererseits wird das Sensorelement hierdurch sicher in seiner Sensorposition gehalten.

In einer bevorzugten Weiterbildung weist die erfindungsgemäße Temperaturmesseinrichtung eine mit der Spannungsversorgung und der Strommesseinrichtung gekoppelte Messwertverarbeitungseinrichtung mit einer Temperaturmesswert- und Temperaturmesswertfehlerausgabe- und/oder -anzeigeeinrichtung auf. Diese Ausbildung der erfindungsgemäßen Temperaturmesseinrichtung dient dazu, die Zeit zu minimieren, bis ein Messwert nach dem Eintauchen des Sensorelementes in das zu messende Medium zur Verfügung steht. Dies ist beispielsweise in Feingießereien wichtig, da die Aufheizzeit von kleinen Metallvolumina gering ist und somit eine Messung bereits nach weniger als einer Minute einen präzisen Messwert liefern muss. Um neben dem Temperaturmesswert auch eine Temperaturmesswertfehlerausgabe erfindungsgemäß zur Verfügung stellen zu können, ermittelt die Messelektronik der Temperaturmesseinrichtung aus dem Anstieg der Temperatur in Abhängigkeit von der Eintauchzeit bei bekanntem Wärmeleitwert und bekannter Wärmekapazität der Verkapselung sowie des Sensorelementes bereits einen Temperaturwert, noch weit bevor ein stabiler elektrischer Messwert durch die Temperaturmesseinrichtung ermittelt wird. Die in der erfindungsgemäßen Temperaturmesseinrichtung verwendete Messelektronik gibt dabei einen sich kontinuierlich verkleinernden Vertrauensbereich ± ΔT an, anhand dessen der Operand, der ein Mensch oder auch eine Recheneinheit sein kann, entscheiden kann, ob die erreichte Messpräzision zu einem bestimmten Zeitpunkt bereits ausreicht.

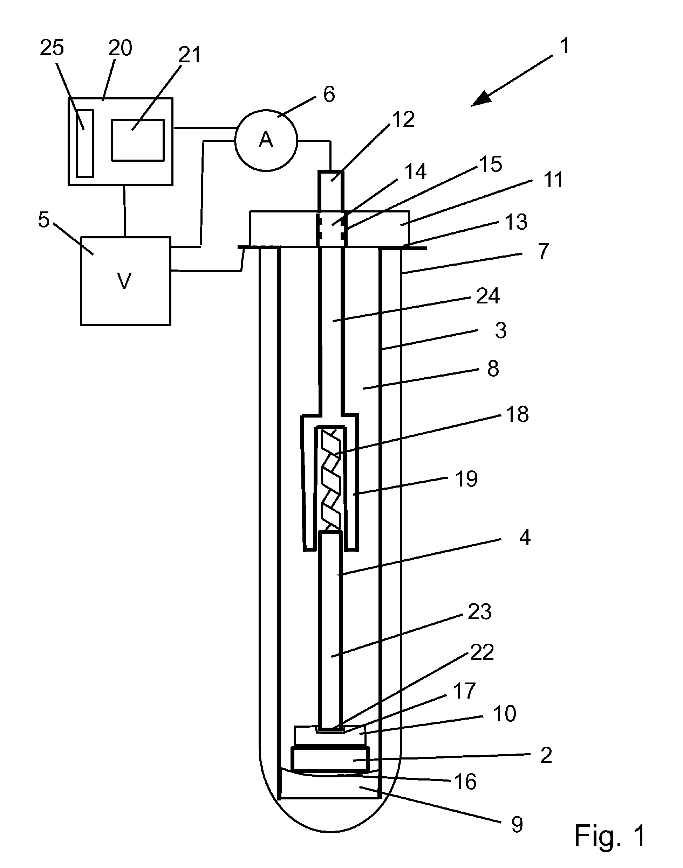

Ein Beispiel für die vorliegenden Erfindung, dessen Aufbau, Funktion und Vorteile wird im Folgenden anhand einer Figur näher erläutert, wobei
- Figur 1: schematisch eine Ausführungsform der erfindungsgemäßen Temperaturmesseinrichtung in einer geschnittenen Seitenansicht zeigt.

Figur 1 zeigt schematisch eine mögliche Ausführungsform einer erfindungsgemäßen Temperaturmesseinrichtung 1 in einer geschnittenen Seitenansicht. Dabei sind Größe und Relation der einzelnen Elemente der erfindungsgemäßen Temperaturmesseinrichtung 1 nicht maßstabsgerecht, sondern dienen in erster Linie einer Veranschaulichung des Grundaufbaus und verwendeten Messprinzips der erfindungsgemäßen Temperaturmesseinrichtung. Dabei können zusätzlich und/oder in Ergänzung zu einzelnen Merkmalen beziehungsweise Elementen der in Figur 1 dargestellten Temperaturmesseinrichtung 1 andere Merkmale oder Elemente verwendet werden. Auch können einzelne Elemente der in Figur 1 dargestellten Temperaturmesseinrichtung 1 in anderen Ausführungsformen der Erfindung weggelassen werden.

Die Temperaturmesseinrichtung 1 weist ein Sensorelement 2 auf, welches aus wenigstens einem Sensormaterial ausgebildet ist, das bei 300 K eine Bandlücke von ≥ 2 eV, bevorzugt von ≥ 3,2 eV, besonders bevorzugt ≥ 4 eV, aufweist. Beispielsweise kann das Sensormaterial Aluminiumnitrid, Magnesiumoxid, Spinell, Aluminiumoxid, Yttriumoxid, Zirkoniumoxid, Zirkoniumsilikat, Bornitrid, Galliumnitrid oder auch Bor sein. Die genannten Materialien können einzeln oder auch in Kombination zur Ausbildung des Sensorelementes 2 verwendet werden. Ferner kommt eine Vielzahl weiterer möglicher Materialien oder Materialkombinationen für die Ausbildung des Sensorelementes 2 in Betracht, welche beispielhaft, aber nicht abschließend oben und in den Patentansprüchen angegeben sind.

Das Sensorelement 2 kann als eine Schicht, eine Schichtfolge, eine Platte, einen Plattenstapel oder auch als Materialblock ausgebildet sein, wobei Abmessungen und Form des Sensorelementes 2 grundsätzlich variabel sind. Vorteilhaft ist es jedoch, wenn das Sensorelement 2, wie es in der Darstellung von Figur 1 gezeigt ist, wenigstens zwei, vorzugsweise einander gegenüber liegende Oberflächen aufweist, an welchen elektrische Kontaktierungen geeignet vorgenommen werden können.

In der Ausführungsform von Figur 1 sind beidseitig des Sensorelementes 2 Kontaktelemente 9, 10 vorgesehen. Die Kontaktelemente 9, 10 sind aus bei Raumtemperatur elektrisch leitfähigem Material ausgebildet. Vorzugsweise sind die Kontaktelemente 9, 10 aus Metall ausgebildet. Es ist jedoch auch möglich, dass die Kontaktelemente 9, 10 aus elektrisch leitfähigem Nitrid und/oder elektrisch leitfähigem Karbid und/oder elektrisch leitfähigem Oxid ausgebildet sind.

Sowohl das Sensormaterial des Sensorelementes 2 als auch das Material der Kontaktelemente 9, 10 besitzt eine Schmelztemperatur von ≥ 1800 °C.

In anderen, nicht gezeigten Ausführungsformen der vorliegenden Erfindung können die Kontaktelemente 9, 10 auch weggelassen werden, wobei in diesen Fällen das Sensorelement 2 direkt über nachfolgend noch näher erläuterte Anschlusselemente 3, 4 elektrisch kontaktiert wird.

Bei der Temperaturmesseinrichtung 1 aus Figur 1 wird das Sensorelement 2 geklemmt zwischen den Kontaktelementen 9, 10 gehalten. Dabei weist das Kontaktelement 9 eine wannenartige Aussparung 16 auf, durch welche das Kontaktelement 2 sicher etwa mittig auf dem Kontaktelement 9 gehalten wird.

In anderen, nicht gezeigten Ausführungsformen der vorliegenden Erfindung können die Kontaktelemente 9, 10 auch auf dem Sensorelement 2 abgeschiedene Schichten oder Schichtfolgen sein. Es ist ferner in anderen Varianten der vorliegenden Erfindung möglich, dass das Sensormaterial des Sensorelementes 2 auf den Kontaktelementen 9, 10 aufgewachsenes Material ist, welches nachfolgend zur Ausbildung des Sensorelementes 2 unter Zusammenfügung vorgefertigter Kontaktelement-Sensormaterial-Bausteine gebondet wurde. Ferner ist es in anderen Ausführungsbeispielen der vorliegenden Erfindung auch möglich, die Kontaktelemente 9, 10 als Platten auszubilden und diese mit entsprechenden Bondoberflächen des Sensorelementes 2 zu bonden.

In der Temperaturmesseinrichtung 1 erfolgt der elektrische Anschluss des Sensorelementes 2 über die Kontaktelemente 9, 10, die jeweils mit Anschlusselementen 3, 4 elektrisch verbunden sind.

Das Anschlusselement 3 ist dabei hülsenartig oder rohrförmig oder halbrohrförmig ausgebildet und drückt auf das in Figur 1 unten angeordnete Kontaktelement 9. In anderen, nicht gezeigten Ausführungsformen der vorliegenden Erfindung kann das Anschlusselement 3 auch stabförmig ausgebildet sein.

Die elektrische Verbindung zwischen dem Anschlusselement 3 und dem Kontaktelement 9 kann, wie es in Figur 1 dargestellt ist, seitlich an dem Kontaktelement 9 erfolgen. In anderen Varianten der Erfindung kann das Anschlusselement 3 auch auf eine Oberfläche des Kontaktelementes 9 drücken. Der elektrische Kontakt zwischen Kontaktelement 9 und Anschlusselement 3 wird in beiden Fällen mechanisch hergestellt. Dies ist dadurch möglich, dass sich das Kontaktelement 9 an einem unteren Ende einer das Sensorelement 2 umgebenden Verkapselung 7 befindet.

Die Verkapselung 7 ist dabei in der Ausführungsform von Figur 1 in Form eines Verkapselungsrohres, vorliegend auch Tubus genannt, ausgebildet. In dem gezeigten Ausführungsbeispiel ist die Verkapselung 7 ein Keramikrohr, kann aber in anderen, nicht gezeigten Ausführungsformen der vorliegenden Erfindung auch beispielsweise ein Molybdänrohr sein. Ferner kann die Verkapselung eine in Figur 1 nicht gezeigte, bis 1800 °C stabile Beschichtung aufweisen.

Die Verkapselung 7 ist nach außen hin gasdicht verschlossen. Im Innenraum 8 der Verkapselung 7 ist ein Vakuum oder ein Schutzgas vorgesehen. Ein geringer Anteil Wasserstoff im Schutzgas kann beispielsweise in einer Molybdän-Verkapselung eine schleichende Oxidation des Sensorelementes 2 minimieren.

Das Sensorelement 2 und die an das Sensorelement 2 angrenzenden Kontaktelemente 9, 10 befinden sich dabei an einem äußeren Ende bzw. der Spitze des Tubus. Dabei grenzt das Kontaktelement 9 an eine Innenwand der Verkapselung 7.

Da das Anschlusselement 3 das Kontaktelement 9 gegen eine Innenwand der Verkapselung 7 drückt, wird das Kontaktelement 9 in seiner in Figur 1 dargestellten Position mittels des Anschlusselementes 3 sicher gehalten.

Das Anschlusselement 4 ist in der Temperaturmesseinrichtung 1 stabförmig ausgebildet und etwa durch die Mitte der Verkapselung 7 geführt. Mit einem distalen Ende 22 mündet das Anschlusselement 4 in der Ausführungsform von Figur 1 in eine Vertiefung 17 des Kontaktelementes 10 und stellt hier einen elektrischen Kontakt zwischen dem Anschlusselement 4 und dem Kontaktelement 10 her.

Die Anschlusselemente 3, 4 sind aus wenigstens einem Material ausgebildet, das eine Schmelztemperatur von ≥ 1800 °C aufweist. Die Anschlusselemente 3, 4 können aus wenigstens einem Metall und/oder einem anderen metallisch leitfähigen Material, wie elektrisch leitfähigem Nitrid und/oder elektrisch leitfähigem Karbid und/oder elektrisch leitfähigem Oxid, ausgebildet sein.

In der Ausführungsform von Figur 1 ist das Anschlusselement 4 mehrteilig ausgebildet. So besitzt das Anschlusselement 4 ein distales Teil 23, welches gegen das Kontaktelement 10 drückt. Im Anschluss an das distale Teil 23 ist eine Feder 18 vorgesehen, die einerseits mit dem distalen Teil 23 und andererseits mit einem Anschlussteil 24 des Anschlusselementes 4 mechanisch gekoppelt ist. Durch die Feder 18 wird gewährleistet, dass ein geeigneter mechanischer Druck auf das Kontaktelement 10 mithilfe des Anschlusselementes 4 ausgeübt werden kann, sodass das Sensorelement 2 sicher in seiner in Figur 1 dargestellten Sensorposition gehalten werden kann.

In der Ausführungsform von Figur 1 ist über der Feder 18 eine Führungshülse 19 vorgesehen, welche über dem distalen Teil 23 des Anschlusselementes 4 verschieblich ist.

Das Anschlusselement 4 ist am kalten Ende der Verkapselung 7 durch eine Öffnung 15 in einem Verkapselungsdeckel 11 nach außen geführt. Der Verkapselungsdeckel 11 ist aus einem elektrisch isolierenden Material, wie beispielsweise aus Keramik, ausgebildet.

Das Anschlusselement 4 ist in und/oder an der Öffnung 15 unter Ausbildung einer Lötstelle 14 mit dem Verkapselungsdeckel 11 verlötet. Um das Anschlusselement 4 kann an der Lötstelle 14 ein metallischer Kontaktring vorgesehen sein, der einerseits mit dem Anschlusselement 3 und andererseits mit dem Verkapselungsdeckel 11 verlötet ist. Das Anschlusselement 4 kann auch direkt mit der Verkapselung 7 verlötet sein.

Das Anschlusselement 3 ist unterhalb des Verkapselungsdeckels 11 durch einen Spalt, der zwischen dem Teil der Verkapselung 7, in welchem sich das Sensorelement 2 befindet, und dem Verkapselungsdeckel 11 ausgebildet ist, herausgeführt. Das Anschlusselement 3 grenzt in der Darstellung von Figur 1 am kalten Ende der Verkapselung 7 an den Verkapselungsdeckel 11 und ist mit dem Verkapselungsdeckel 11 unter Ausbildung einer umlaufenden Lötstelle 13 verlötet. Zwischen der Verkapselung 7 und dem Verkapselungsdeckel 11 kann ferner ein elektrisch leitfähiger Kontaktring oder wenigstens ein elektrischer Halbring, wie beispielsweise ein Kupferring oder wenigstens eine Kupferöse, vorgesehen sein, der einerseits mit dem Anschlusselement 3 und andererseits mit dem Verkapselungsdeckel 11 verlötet ist.

Der Verkapselungsdeckel 11 dient einer elektrischen Isolation von Anschlusselement 3 und Anschlusselement 4 und verschließt außerdem die Verkapselung 7 gasdicht. In anderen, nicht gezeigten Ausführungsformen der vorliegenden Erfindung kann anstelle des Verkapselungsdeckels 11 auch ein anderes geeignetes, elektrisch isolierendes Trennstück zwischen den Anschlusselementen 3, 4 an deren elektrischen Anschlussbereichen am kalten Ende der Verkapselung 7 vorgesehen sein.

Die Lötstellen 13, 14 können als elektrische Kontakte für die Anschlusselemente 3, 4 genutzt werden.

Zum Herstellen der Lötstellen 13, 14 wird ein Lot mit einer Schmelztemperatur von wenigstens 900 °C verwendet.

Der elektrische Außenkontakt bzw. Anschluss 13 des Anschlusselementes 3 und der aus der Verkapselung 7 herausragende Anschluss 12 des Anschlusselementes 4 sind desweiteren mit einer Spannungsversorgungseinrichtung 5 und einer Strommesseinrichtung 6 elektrisch verbunden. Über die Spannungsversorgungseinrichtung 5 wird an das Sensorelement 2 eine Spannung angelegt. Mithilfe der Strommesseinrichtung 6 kann ein durch das Sensorelement 2 bzw. durch die aus den Kontaktelementen 9, 10 an dem Sensorelement 2 ausgebildete Schottky-Diode fließender Strom gemessen werden.

Der durch die Strommesseinrichtung 6 ermittelte Strom kann mithilfe einer mit der Spannungsversorgungseinrichtung 5 und der Strommesseinrichtung 6 gekoppelten Messwertverarbeitungseinrichtung 20 der Temperaturmesseinrichtung 1 in einen Temperaturwert umgewandelt werden.

Die Temperaturmesseinrichtung 1 weist zudem eine Messwertverarbeitungseinrichtung 20 mit einer Temperaturmesswert- und Temperaturmesswertfehlerausgabeeinrichtung 21 auf. Die Temperaturmesswert- und Temperaturmesswertfehlerausgabeeinrichtung 21 ist in der Lage, nicht nur den aktuellen Temperaturmesswert, sondern auch einen Temperaturmessfehler auszugeben und anzuzeigen.

Da das Sensorelement 2 nach einem ersten Kontakt mit dem zu messenden Medium einige Zeit braucht, um die Messtemperatur zu erreichen und diese damit auch zu messen, wird in der Messwertverarbeitungseinrichtung 20 ein besonderes Berechnungsmodul 25 verwendet. In dieses Berechnungsmodul 25 gehen die erfasste Änderung der Temperatur mit der Zeit sowie die thermischen Leitwerte und die Dimensionen der Verkapselung 7 und des Sensorelementes 2 ein. Das Berechnungsmodul 25 berechnet darauf basierend zunächst einen Vorab-Temperaturmesswert. Zu diesem Vorab-Temperaturmesswert wird durch das Berechnungsmodul 25 ein Fehler ausgegeben, nach welchem ein Bediener oder eine Recheneinheit entscheiden kann, ob die aktuelle Messgenauigkeit für den jeweiligen Messvorgang bereits ausreichend ist. Der Fehler verringert sich mit der Zeit. So kann durch die Messwertverarbeitungseinrichtung 20 bzw. die Temperaturmesswert- und Temperaturmesswertfehlerausgabeeinrichtung 21 sehr schnell ein Temperaturmesswert ausgegeben werden.

Mit der erfindungsgemäßen Temperaturmesseinrichtung 1 steht eine Temperaturerfassungseinheit zur Verfügung, die eine kontinuierliche und dauerhaft präzise Messung der Temperatur in einem Temperaturbereich von 1200 °C bis 1800 °C ermöglicht. Die erreichbare Messunsicherheit ist dabei < 1 %. Grundsätzlich ist es jedoch auch möglich, die erfindungsgemäße Temperaturmesseinrichtung 1 auch für Messungen von geringeren Temperaturen einzusetzen. So kann die Temperaturmesseinrichtung 1 auch mit unterschiedlichen, austauschbaren Sensorelementen 2 für jeweils unterschiedliche Temperatureinsatzbereiche zur Verfügung gestellt werden. Die Auswahl der jeweiligen Sensorelemente 2 erfolgt hierbei nach der Bandlücke des jeweils verwendeten Sensormaterials.

Ferner ist die Präzision der jeweils verwendeten Messelektronik an den entsprechenden Einsatzfall anzupassen. So kann das Sensorelement 2 auch noch für Temperaturmessungen unter 1000 °C eingesetzt werden. Hierzu wird eine Messelektronik verwendet, die auch sehr kleine Ströme unterhalb von 1 µA präzise misst.

Potenzielle Anwendungsgebiete der erfindungsgemäßen Temperaturmesseinrichtung sind in Feingießereien, Stahlgießereien und -schmelzen, der Zementindustrie, in Industrieöfen und bei Anlagen, die thermische Verwertungsprozesse nutzen, zu sehen.

## Patentansprüche

1. Temperaturmesseinrichtung (1) mit wenigstens einem Sensorelement (2), das über Anschlusselemente (3, 4) mit einer elektrischen Spannungsversorgungseinrichtung (5) zum Anlegen einer Spannung an das Sensorelement (2) und einer Strommesseinrichtung (6) zum Messen eines Stromflusses durch das Sensorelement (2) verbunden ist,
**dadurch gekennzeichnet,**
**dass** das Sensorelement (2) aus wenigstens einem Sensormaterial ausgebildet ist, das bei 300 K eine Bandlücke von ≥ 2 eV aufweist, das Sensormaterial und die Anschlusselemente (3, 4) bei 10⁵ Pa eine Schmelztemperatur von ≥ 1800 °C aufweisen, und um das Sensorelement (2) eine gasdicht verschlossene Verkapselung (7) mit einem Innenhohlraum (8) vorgesehen ist, aus welcher Anschlüsse (13, 12) der Anschlusselemente (3, 4) herausgeführt sind.

2. Temperaturmesseinrichtung nach Anspruch 1, **dadurch gekennzeichnet, dass** das Sensorelement (2) mit bei Raumtemperatur elektrisch leitfähigen Kontaktelementen (9, 10) gekoppelt ist, die bei 10⁵ Pa eine Schmelztemperatur von ≥ 1800 °C aufweisen und jeweils mit den Anschlusselementen (3, 4) elektrisch verbunden sind, wobei die Kontaktelemente (9, 10) auf das Sensormaterial abgeschiedene Schichten sind und/oder die Kontaktelemente (9, 10) auf das Sensormaterial gebondete Platten sind und/oder die Kontaktelemente (9, 10) Stempel oder Platten sind, zwischen welchen das Sensorelement (2) geklemmt gehalten wird, und/oder die Kontaktelemente (9, 10) metallische Substrate sind, auf welchen das Sensormaterial aufgewachsen ist, wobei das Sensormaterial nachfolgend zusammengebracht und gebondet wurde.

3. Temperaturmesseinrichtung nach Anspruch 1 oder 2, **dadurch gekennzeichnet, dass** das Sensormaterial aus wenigstens einem Material aus einer ersten Gruppe von Materialien ausgewählt ist, die Aluminium(III)-oxid (Al₂O₃), Bor(III)-oxid (B₂O₃), Bariumoxid (BaO), Berylliumoxid (BeO), Wismut(III)-oxid (Bi₂O₃), Kalziumoxid (CaO), Kalziumtitanat (CaTiO₃), Cer(III)-oxid (Ce₂O₃), Cer(IV)-oxid (CeO₂), Chrom(III)-oxid (Cr₂O₃), Dysprosium(III)-oxid (Dy₂O₃), Erbium(III)-oxid (Er₂O₃), Europium(III)-oxid (Eu₂O₃), Gallium(III)-oxid (Ga₂O₃), Gadolinium(III)-oxid (Gd₂O₃), Hafnium(IV)-silikat (HfSiO₄), Hafnium(IV)-oxid (HfO), Holmium(III)-oxid (Ho₂O₃), Indium(III)-oxid (In₂O₃), Spinell (MgAl₂O₄), Magnesiumoxid (MgO), Magnesiumzinkoxid (MgZnO), Niob(II)-oxid (NbO), Niob(IV)-oxid (NbO₂), Neodym(III)-oxid (Nd₂O₃), Nickelaluminat (NiAl₂O₄), Nickel(II)-oxid (NiO), Lanthan(III)-oxid (La₂O₃), Lutetium(III)-oxid (Lu₂O₃), Lutetiumsilikat (Lu₂SiO₅), Promethium(III)-oxid (Pm₂O₃), Praseodym(III)-oxid (Pr₂O₃), Scandium(III)-oxid (Sc₂O₃), Samarium(III)-oxid (Sm₂O₃), Strontiumoxid (SrO), Strontiumtitanat (SrTiO₃), Tantal(V)-oxid (Ta₂O₅), Terbium(III)-oxid (Tb₂O₃), Thulium(III)-oxid (Tm₂O₃), Titan(III)-oxid (Ti₂O₃), Titan(IV)-oxid (TiO₂), Vanadium(IV)-oxid (VO₂), Yttrium(III)-oxid (Y₂O₃), Ytterbium(III)-oxid (Yb₂O₃), Zink(II)-oxid (ZnO), Zinkgermanat (Zn₂GeO₄), Zirkonium(II)-oxid (ZrO₂), Zirkoniumsilikat (ZrSiO₄), Aluminiumnitrid (AIN), Bornitrid (BN), Berylliumnitrid (Be₃N₂), Galliumnitrid (GaN), Siliziumnitrid (Si₃N₄), Bariumsulfid (BaS), Kalziumsulfid (CaS), Europium(II)-sulfid (EuS), Magnesium(II)-sulfid (MgS), Strontiumsulfid (SrS), Tantal(IV)-sulfid (TaS₂), Titan(II)-sulfid (TiS), Yttrium(III)-sulfid (Y₂S₃), Yttrium(III)-antimonit (YSb), Aluminiumkarbid (Al₄C₃), Borkarbid (B₄C), Berylliumkarbid (Be₂C), Kalziumkarbid (CaC₂), Chrom(II)-karbid (Cr₃C₂), Eisenkarbid (Fe₃C), Lanthankarbid (LaC₂), Siliziumkarbid (SiC), Tantalhafniumkarbid (Ta₄HfC₅), Aluminiumphosphid (AIP), Aluminium-magnesiumborid (AIMgB₁₄), Calciumhexaborid (CaB₆), Cerhexaborid (CeB₆), Chrom(II)-borid (CrB), Hafniumborid (HfB₂), Lanthanhexaborid (LaB₆), Rheniumdiborid (ReB₂), Rutheniumdiborid (RuB₂), Siliziumhexaborid (SiB₆), Samariumhexaborid (SmB₆), Strontiumhexaborid (SrB₆), Tantaldiborid (TaB₂), Titandiborid (TiB₂), Wolframdiborid (WB₂), Yttriumhexaborid (YB₆), Zirkoniumdiborid (ZrB₂) und/oder Bor (B) aufweist; und/oder dass das Sensormaterial aus einer Materialkombination aus Materialien besteht, die aus dieser ersten Gruppe von Materialien ausgewählt sind; und/oder dass die Kontaktelemente und/oder die Anschlusselemente aus wenigstens einem Material ausgebildet sind, das ausgewählt ist aus einer zweiten Gruppe von Materialien, die Chrom, Hafnium, Iridium, Molybdän, Niob, Rhenium, Ruthenium, Tantal, Vanadium, Wolfram und/oder Zirkonium aufweist; und/oder dass die Kontaktelemente und/oder die Anschlusselemente aus einer Materialkombination aus Materialien besteht, die aus dieser zweiten Gruppe von Materialien ausgewählt sind.

4. Temperaturmesseinrichtung nach wenigstens einem der vorhergehenden Ansprüche, **dadurch gekennzeichnet, dass** die Verkapselung (7) aus Keramik und/oder aus wenigstens einem Metall, das bei 10⁵ Pa eine Schmelztemperatur von ≥ 1800 °C hat und/oder eine bis wenigstens 1800 °C beständige Außenbeschichtung aufweist, und/oder wenigstens einer Metalllegierung, die bei 10⁵ Pa eine Schmelztemperatur von ≥ 1800 °C hat und/oder eine bis wenigstens 1800 °C beständige Außenbeschichtung aufweist, ausgebildet ist.

5. Temperaturmesseinrichtung nach wenigstens einem der vorhergehenden Ansprüche, **dadurch gekennzeichnet, dass** die Verkapselung (7) ein Tubus ist oder die Verkapselung (7) zumindest ein Teil einer Ofen-, Tiegel- oder Reaktorwand ist.

6. Temperaturmesseinrichtung nach wenigstens einem der vorhergehenden Ansprüche, **dadurch gekennzeichnet, dass** ein innerhalb der Verkapselung (7) mit wenigstens einem ersten Kontaktelement (9) elektrisch verbundenes erstes Anschlusselement (3) und ein innerhalb der Verkapselung (7) mit wenigstens einem zweiten Kontaktelement (10) elektrisch verbundenes zweites Anschlusselement (4) vorgesehen ist, wobei die Anschlusselemente (3, 4) aus der Verkapselung (7) herausragen und wenigstens durch ein keramisches Trennstück und/oder einen keramischen Verkapselungsdeckel (11) voneinander elektrisch isoliert sind.

7. Temperaturmesseinrichtung nach Anspruch 6, **dadurch gekennzeichnet, dass** die Verkapselung (7) mit dem ersten Anschlusselement (3) gasdicht verlötet ist, das erste Anschlusselement (3) mit dem Trennstück und/oder dem Verkapselungsdeckel (11) gasdicht verlötet ist, und das Trennstück und/oder der Verkapselungsdeckel (11) mit dem zweiten Anschlusselement (4) gasdicht verlötet ist, wobei das zum Löten verwendete Lot eine Schmelztemperatur von wenigstens 900 °C aufweist.

8. Temperaturmesseinrichtung nach Anspruch 6 oder 7, **dadurch gekennzeichnet, dass** das zweite Anschlusselement (4) durch eine Öffnung (15) in dem Trennstück und/oder dem Verkapselungsdeckel (11) hindurch, ohne elektrischen Kontakt zu dem ersten Anschlusselement (3) geführt ist.

9. Temperaturmesseinrichtung nach wenigstens einem der vorhergehenden Ansprüche, **dadurch gekennzeichnet, dass** das Sensorelement (2) durch die Anschlusselemente (3, 4) und/oder die Kontaktelemente (9, 10) mechanisch in einer Sensorposition fixiert ist.

10. Temperaturmesseinrichtung nach wenigstens einem der vorhergehenden Ansprüche, **dadurch gekennzeichnet, dass** wenigstens eines der Kontaktelemente (9, 10) eine wannenartige Aussparung (16) zur Aufnahme des Sensorelementes (2) aufweist.

11. Temperaturmesseinrichtung nach wenigstens einem der vorhergehenden Ansprüche, **dadurch gekennzeichnet, dass** das Sensorelement (2) und/oder wenigstens eines der Kontaktelemente (9, 10) wenigstens eine Vertiefung (17) zum Einbringen des wenigstens einen Anschlusselementes (4) aufweist.

12. Temperaturmesseinrichtung nach wenigstens einem der vorhergehenden Ansprüche, **dadurch gekennzeichnet, dass** die Anschlusselemente (3, 4) stabförmig, rohrförmig und/oder halbrohrförmig ausgebildet sind.

13. Temperaturmesseinrichtung nach wenigstens einem der vorhergehenden Ansprüche, **dadurch gekennzeichnet, dass** wenigstens eines der Anschlusselemente (4) wenigstens teilweise durch wenigstens eine unter Vorspannung stehende metallische Feder (18) ausgebildet ist, wobei um die Feder (18) eine an dem Anschlusselement (4) verschiebbare Führungshülse (19) vorgesehen ist.

14. Temperaturmesseinrichtung nach wenigstens einem der vorhergehenden Ansprüche, **dadurch gekennzeichnet, dass** die Temperaturmesseinrichtung (1) eine mit der Spannungsversorgungseinrichtung (5) und der Strommesseinrichtung (6) gekoppelte Messwertverarbeitungseinrichtung (20) mit einer Temperaturmesswert- und Temperaturmesswertfehlerausgabe- und/oder -anzeigeeinrichtung (21) aufweist.
